Europäisches Patentamt

European Patent Office

Office européen des brevets

(11) Veröffentlichungsnummer: **0 295 444 B1**

## EUROPÄISCHE PATENTSCHRIFT

(45) Veröffentlichungstag der Patentschrift: **26.02.92**

(21) Anmeldenummer: **88107908.1**

(22) Anmeldetag: **18.05.88**

(51) Int. Cl.⁵: **F16L  27/10**, F16L 21/02,
F16L 13/02, F01N 7/18

(54) **Verbindung zweier Rohre einer Leitung für heisse Medien.**

(30) Priorität: **13.06.87 DE 3719840**

(43) Veröffentlichungstag der Anmeldung:
**21.12.88 Patentblatt  88/51**

(45) Bekanntmachung des Hinweises auf die
Patenterteilung:
**26.02.92 Patentblatt  92/09**

(84) Benannte Vertragsstaaten:
**DE ES FR GB IT SE**

(56) Entgegenhaltungen:
**EP-A- 0 208 128**
**DE-A- 3 527 213**
**DE-B- 2 222 355**
**US-A- 1 894 094**

(73) Patentinhaber: **Witzenmann GmbH**
**Metallschlauch-Fabrik Pforzheim**
**Östliche Karl-Friedrich-Strasse 134**
**W-7530 Pforzheim(DE)**

(72) Erfinder: **Doerge, Franz**
**Brunnenstrasse 26, I**
**W-7538 Keltern 3(DE)**
Erfinder: **Erlenmayer, Udo**

**Am Roten Maeuerle 28**
**W-7530 Pforzheim(DE)**
Erfinder: **Faber, Bernd, Dr. Ing.**
**Buehlstrasse 25**
**W-7850 Loerrach(DE)**
Erfinder: **Herty, Winfried**
**Redtenbacherstr. 27**
**W-7530 Pforzheim(DE)**
Erfinder: **Munz, Guenter**
**Rebenweg 20**
**W-7530 Pforzheim(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**W-7500 Karlsruhe 1(DE)**

## Beschreibung

Die Erfindung betrifft eine Verbindung zweier Rohre einer Leitung für heiße Medien, insbesondere Abgasleitung von Kraftfahrzeugen, wobei die aufeinander zu gerichteten Rohrenden einen sie miteinander verbindenden, koaxialen Ringraum wenigstens teilweise mit ausbilden, in welchem mindestens ein als Ring ausgebildetes, im axialen Querscnitt im wesentlichen rechteckiges, aus temperatur- und korrosionsbeständigem Material gepreßtes Dichtkissen mit gedämpft federnden Eigenschaften in Radial- und Axialrichtung gehalten angeordnet ist, über das die Rohrenden flexibel axial und angular beweglich dicht miteinander verbunden sowie radial und axial abgestützt sind, und wobei das Dichtkissen durch wenigstens eine sich über den gesamten radialen Bereich des Ringraumes im wesentlichen radial erstreckende Dichtmembran aus temperatur- und korrosionsbeständigem Material ergänzt ist.

Eine derartige Verbindung, bei der das Dichtkissen aus Keramik- oder Metallmaterial in Form eines Faser- oder Drahtvlieses, -geflechtes, -gewebes, -gestrickes oder dergleichen gepreßt sein kann, ist durch die DE-A-35 27 213 bekannt. Hier sind die aus Dichtkissen und Dichtmembran gebildeten Baueinheiten im Ringraum durch dessen Wandungen in Radialrichtung sowie durch Anschlagmittel in Form der Wandungsgestaltung, eingesetzter Sprengringe oder dergleichen in Axialrichtung gehalten. Im Betrieb werden jedoch die aus Dichtkissen und Dichtmembran gebildeten Baueinheiten in gewissem Maße insbesondere auch radial zusammengedrückt, wodurch sich Undichtigkeiten ergeben. Außerdem hat sich die Torsionsbeweglichkeit der bekannten Verbindung als zu groß bzw. die Fähigkeit zur Torsionskraftabstützung als zu klein erwiesen selbst für den Fall, daß Teile der Dichtkissen durch Umbördelungen der den Ringraum bildenden Wandung gefaßt sind, denn auch hier kann das Dichtkissen infolge betriebsbedingter Setzungserscheinungen schließlich in Umfangsrichtung durchrutschen.

Aufgabe der Erfindung ist es daher, eine Verbindung der eingangs genannten Art so auszubilden, daß mit Sicherheit eine vollkommene Dichtheit erreicht wird und gleichzeitig eine hohe Torsionskraftaufnahmefähigkeit, das heißt geringe Torsionsbeweglichkeit gewährleistet ist.

Diese Aufgabe ist erfindungsgemäß ausgehend von einer Verbindung der eingangs genannten Art dadurch gelöst, daß die Dichtmembran entlang ihres Außen- und Innenumfanges mit den benachbarten Wandungen des Ringraumes verschweißt ist.

Durch diese Maßnahme ist eine absolute Dichtheit der erfindungsgemäßen Verbindung erreicht, wobei gleichzeitig eine hohe Torsionssteifigkeit gewährleistet ist, denn die Dichtmembran läßt praktisch keine Torsionsbewegung zwischen ihrem Außenumfang und ihrem Innenumfang zu, mit denen sie auf der anderen Seite keine Bewegungen mehr gegenüber den Wandungen des Ringraumes ausführen kann.

Andererseits ist durch die erfindungsgemäße Maßnahme von der Dichtfunktion der Dichtkissen im wesentlichen Unabhängigkeit erreicht und die Aufgabe dieser Kissen im wesentlichen auf die der gegenseitigen Abstützung der miteinander zu verbindenen Rohrenden reduziert. Dies hat auch zur Folge, daß nunmehr die Dichtkissen nicht unbedingt als durchgehend ringförmiges Gebilde ausgeführt sein müssen, sondern sich vielmehr auch aus Ringsegmenten zusammensetzen können je nachdem, was sich für den gerade vorhandenen Anwendungsfall als die zweckmäßigste und billigste Lösung herausstellt.

Normalerweise kann vorgesehen sein, daß jeweils ein Dichtkissen und eine Dichtmembran nebeneinander angeordnet sind. Zweckmäßig ist es jedoch, daß beidseits der Dichtmembran je ein Dichtkissen angeordnet ist, so daß die Dichtmembran beidseits gut abgestützt und gegen äußere Einflüsse weitgehend geschützt ist.

Dabei kann vorgesehen sein, daß jedes Dichtkissen mit seiner der Dichtmembran abgewandten Seite gegebenenfalls unter Vorspannung durch entlang seines Außen-und Innenumfanges mit der benachbarten Wandung des Ringraumes fest verbundene Stützringe gehalten ist, wobei die mit dem jeweiligen Dichtkissen in Berührung stehende Oberfläche der Stützringe abgerundet sein kann, um bezüglich auftretender gegenseitiger Relativbewegungen eine Kantenpressung zwischen Stützringen und Dichtkissen zu vermeiden.

Nach einer anderen Bauform kann vorgesehen sein, daß Dichtmembran und Dichtkissen zwischen koaxialen, den Ringraum im wesentlichen bildenden Halteringen angeordnet sind und daß die Halteringe mit den Rohrenden verbunden sind. Dabei können die Halteringe aus den Rohrenden geformt sein. Es besteht jedoch auch die Möglichkeit, daß die Halteringe wenigstens mittelbar mit den Rohrenden durch Schweißen verbunden sind. In beiden Fällen können die Dichtkissen entlang ihres Außen- und Innenumfanges auf der der Dichtmembran abgewandten Seite durch klammerartige Ausbildung der Halteringe gegebenenfalls unter Vorspannung gefaßt sein. Andererseits gibt die Bauform mit eingeschweißten Halteringen die Möglichkeit, die aus Dichtkissen und Dichtmembran gebildeten Baueinheiten zusammen mit den Halteringen vorzufertigen, um sie erst danach zwischen den Rohrenden mit Hilfe einer Schweißverbindung fest einzusetzen.

In Weiterbildung des Erfindungsgegenstandes kann das Material des jeweiligen Dichtkissens entlang seines Außen- und Innenumfanges verdichtet und das Dichtkissen dort mit der benachbarten Wandung des Ringraumes verschweißt sein, womit sich eine Steigerung der Stabilität und Festigkeit der Verbindung, die Verhinderung des Setzens der Kissen und damit die Aufrechterhaltung des Kraft-Weg-Verhaltens sowie ein größerer Schutz der Dichtmembran ergeben. Auch tritt auf diese Weise eine größere Belastungsfähigkeit insbesondere bezüglich der Abstützung von Torsionskräften auf.

Es besteht die Möglichkeit, daß die Dichtmembran mehrlagig ausgebildet ist, was dazu führt, daß beim Undichtwerden einer der Lagen noch nicht die Dichtmembran in ihrer Gesamtheit undicht ist.

Ferner kann die Dichtmembran konzentrisch umlaufend eine Profilierung in Form einer Wellung, Abstufung oder dergleichen aufweisen, was ihre Flexibilität steigert und die Bildung von Knitterfältchen verhindert, ohne daß dadurch die Dichtfunktion und die Fähigkeit der Torsionskraftaufnahme beeinträchtigt wäre.

Schließlich kann die aus Dichtmembran und Dichtkissen gebildete Baueinheit zur Radialrichtung geneigt angeordnet sein, womit eine Beeinflussung der Fähigkeit zur Aufnahme von Axialkräften in konstruktiv durch den Neigungswinkel vorherbestimmbarer Weise möglich ist.

In diesem Zusammenhang läßt sich eine weitere Steigerung bzw. Beeinflussung auch dadurch erreichen, daß beispielsweise zwei aus Dichtmembran und Dichtkissen gebildete, nebeneinander angeordnete Baueinheit in gegenläufiger Richtung geneigt angeordnet werden, so daß die Fähigkeit der Axialkraftabstützung in beiden Axialrichtungen gesteigert ist.

In weiterer Anwendung des Gegenstandes der Erfindung kann vorgesehen sein, daß bei zwei zueinander parallele Leitungen die äußeren Wandungen ihrer Ringräume zu einem gemeinsam ovalen Haltering zusammengefaßt und die Dichtmembran sowie die Dichtkissen als gemeinsame brillenförmige Einheit ausgebildet sind.

Hiermit ist für zwei zueinander parallele Leitungen unter Aufrechterhaltung der mit der Erfindung erzielten Vorteile eine kompakte Baueinheit gebildet, die einen sehr geringen Abstand der nebeneinander liegenden Leitungen ermöglicht, was insbesondere für Abgasleitungen von Kraftfahrzeugmotoren sehr vorteilhaft sein kann, da in den Motorräumen von Kraftfahrzeugen erfahrungsgemäß nur wenig Platz zur Verfügung steht.

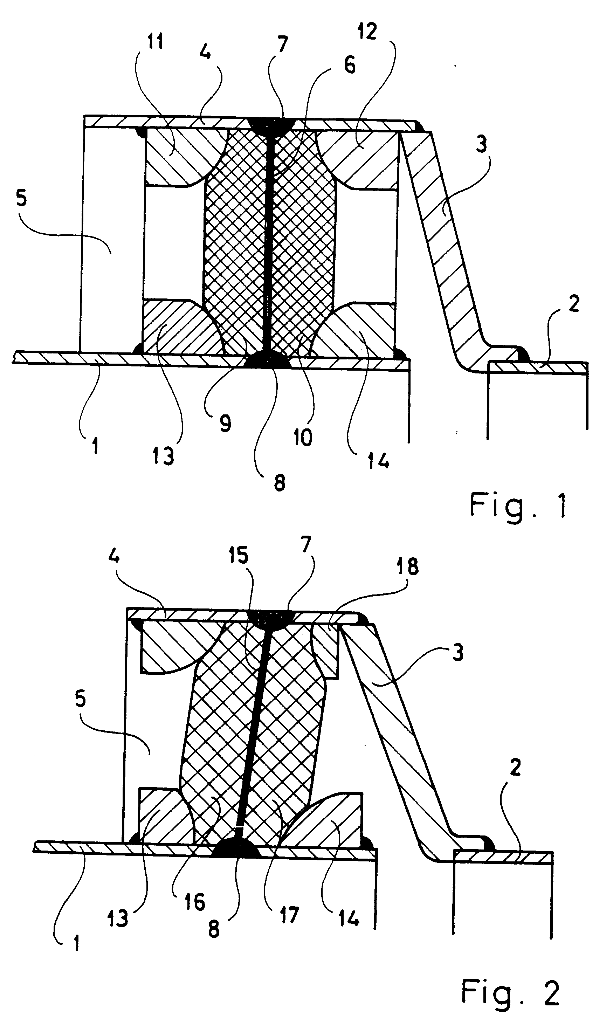

Weitere Merkmale und Einzelheiten der Erfindung ergeben sich aus der nachfolgenden Beschreibung von Ausführungsformen anhand der Zeichnung, in deren Figuren 1 bis 6 verschiedene Varianten der erfindungsgemäßen Rohrverbindung teilweise jeweils nur im hälftigen Axialschnitt dargestellt sind, unterhalb dessen man sich dann in horizontaler Anordnung die Rohrachse und damit die Rotationsachse vorzustellen hat, zu der der im Schnitt dargestellte Gegenstand symmetrisch ist.

Figur 1 zeigt die beiden aufeinander zu gerichteten Enden 1, 2 zweier Leitungsrohre. An das Leitungsrohr 2 ist ein radial nach außen gerichteter Bund 3 angeschweißt, an dem sich ebenfalls über eine Schweißverbindung eine zylindrische Hülse 4 anschließt. Die Hülse 4 und das Leitungsrohr 1 bilden auf diese Weise einen Ringraum 5.

Innerhalb des Ringraumes 5 ist eine ringförmige Dichtmembran 6 aus temperatur- und korrosionsbeständigem Material angeordnet und entlang ihrem Außenumfang bei 7 mit der Hülse 4 und entlang ihrem Innenumfang bei 8 mit dem Leitungsrohr 1 dicht verschweißt.

Auf beiden Seiten der Dichtmembran 6 befinden sich ringförmige Dichtkissen 9, 10 beispielsweise aus einem Metalldrahtgestricke, das mit einem zugesetzten Gleit-und Dichtmittel verpreßt ist. Die Dichtkissen 9, 10 sind in Radialrichtung gegenüber dem Leitungsrohr 1 und der Hülse 4 in spielfreier Anlage, während sie in Axialrichtung vorgespannt zwischen äußeren Stützringen 11, 12 und inneren Stützringen 13, 14 eingefangen sind, die zur Vermeidung einer Kantenpressung auf ihrer den Dichtkissen 9, 10 zugewandten Seite abgerundet sind.

Wie ersichtlich, ist auf diese Weise eine flexible Verbindung der Leitungsrohre 1 und 2 geschaffen, die in vorherbestimmbaren Grenzen Axial- und Angularbewegungen der Leitungsrohre gegeneinander erlaubt, während durch die Dichtmembran 6 Torsionsbewegungen praktisch vollständig abgestützt und eine entsprechende Torsionssteifigkeit der Rohrverbindung geschaffen ist.

Andererseits ist die Rohrverbindung absolut gas- bzw. flüssigkeitsdicht, dadurch, daß die Dichtmembran 6 fest eingeschweißt ist. Die Dichtkissen 9, 10 erfüllen in ihrer Anordnung im wesentlichen eine Stützfunktion bezüglich der zwischen den beiden Rohrenden 1, 2 auftretenden Kräften bzw. Bewegungen.

Wie ersichtlich ist die Dichtmembran 6 mehrlagig ausgebildet, so daß die Dichtheit der Rohrverbindung auch bei Undichtwerden einer Membranlage noch nicht verloren geht.

Wie ferner aus der Zeichnung ersichtlich, sind die Dicht- bzw. Stützkissen 9, 10 im Bereich ihres äußeren und inneren Umfanges zusammengedrückt und in die Schweißnähte 7, 8 mit einbezogen, wodurch sich eine Erhöhung der Stabilität und Belastbarkeit der Leitungsverbindung ergibt.

Bei der in Figur 1 gezeigten Ausführungsform ist die durch die Dichtmembran 6 sowie die Dichtkissen 9 und 10 gebildete Baugruppe im wesentlichen radial gerichtet, so daß sie insbesondere auch bezüglich axialer Belastung gleichermaßen trägt unabhängig davon, ob die Belastung von rechts oder von links kommt.

Demgegenüber zeigt Figur 2 eine mit der Ausführungsform gemäß Figur 1 weitgehend vergleichbare Bauform, bei der die durch die Dichtmembran 15 sowie Dichtkissen 16 und 17 gebildete Baueinheit zur nicht dargestellten Rotationsachse schräg steht, so daß die axiale Kraftaufnahmefähigkeit unterschiedlich ist je nachdem, ob die so gebildete Rohrverbindung von rechts oder von links belastet wird.

Auch im Falle der Figur 2 sind im übrigen die anhand der Figur 1 geschilderten Konstruktionselemente vorhanden, weshalb diese mit der gleichen Bezifferung versehen sind. Lediglich der Stützring 18 hat infolge der anhand der Figur 2 veranschaulichten Schrägstellung der Rohrverbindung andere Abmessungen als der entsprechende Stützring 12 in Figur 1.

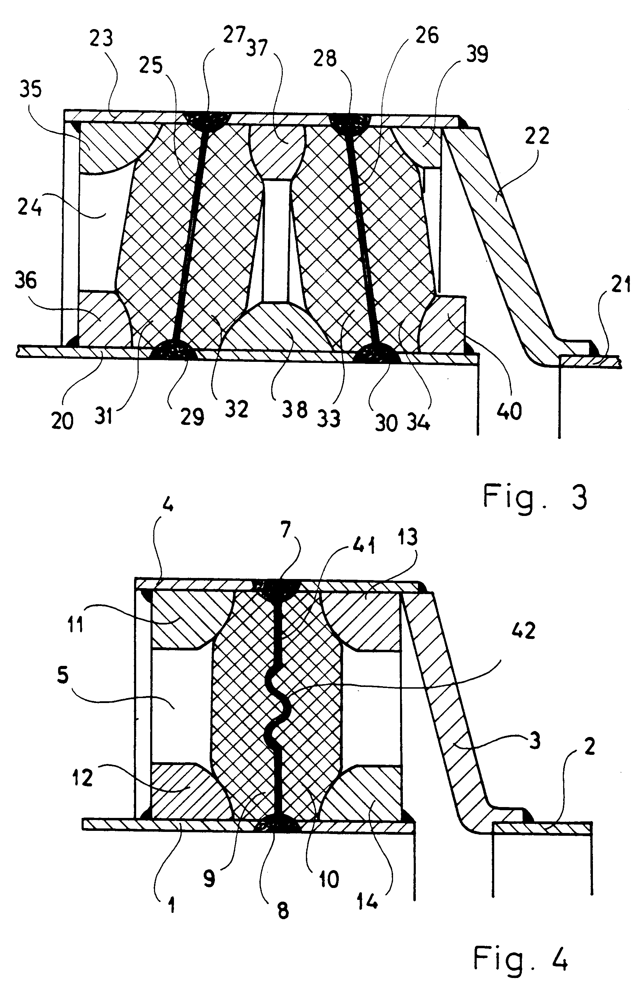

Figur 3 zeigt eine auf der Grundlage der Bauform gemäß Figur 2 erweiterte Rohrverbindung.

Es sind die koaxialen Leitungsrohre 20 und 21 miteinander verbunden, wobei sich an das Leitungsrohr 21 ein nach radial außen gerichteter Bund 22 anschließt, von dem eine zylindrische Hülse 23 ausgeht, so daß zwischen Leitungsrohr 20 und Hülse 23 ein Ringraum 24 gebildet ist.

Innerhalb dieses Ringraumes sind zwei mehrlagige Dichtmembranen 25 und 26 entlang ihres Außenumfanges bei 27 bzw. 28 und entlang ihres Innenumfanges bei 29 bzw. 30 mit den Wandungen des Ringraumes 24 verschweißt, wobei die Dichtmembranen 25 und 26 gegenüber der Rohrachse gegenläufig schräggestellt sind.

Beidseits der Dichtmembran 25 bzw. 26 befinden sich in der bereits beschriebenen Weise Dicht- bzw. Stützkissen 31, 32 bzw. 33, 34, die zwischen Stützringen 35 bis 40 entlang ihrem äußeren und inneren Umfang eingespannt und gleichzeitig durch die Schweißnähte 27 bis 30 miterfaßt sind. Dabei können in diesem Falle die Stützringe 37, 38 den beiden Stützkissen 32 bzw. 33 gemeinsam sein.

Wie ersichtlich, sind auch hier die Dicht- bzw. Stützkissen im Bereich ihres äußeren und inneren Umfanges verdichtet, so, daß ihre Einbeziehung in die Schweißverbindungen 27 bis 30 keine Probleme bereiten auch dann, wenn die Dicht- bzw. Stützkissen aus einem Drahtgestricke, Drahtgewebe oder dergleichen gepreßt sind.

Figur 4 veranschaulicht eine Ausführungsform gemäß Figur 1, weshalb insoweit die dortigen Bezugszeichen wiederverwendet sind.

Unterschiedlich ist jedoch, daß die Dichtmembran 41 in der radialen Mitte eine Profilierung in Form ringförmig umlaufender Wellen 42 aufweist, die ihr eine besondere Flexibilität sowohl hinsichtlichs der Aufnahme angularer als auch hinsichtlich der Aufnahme axialer Bewegungen zwischen den Leitungsrohren 1 und 2 verleihen.

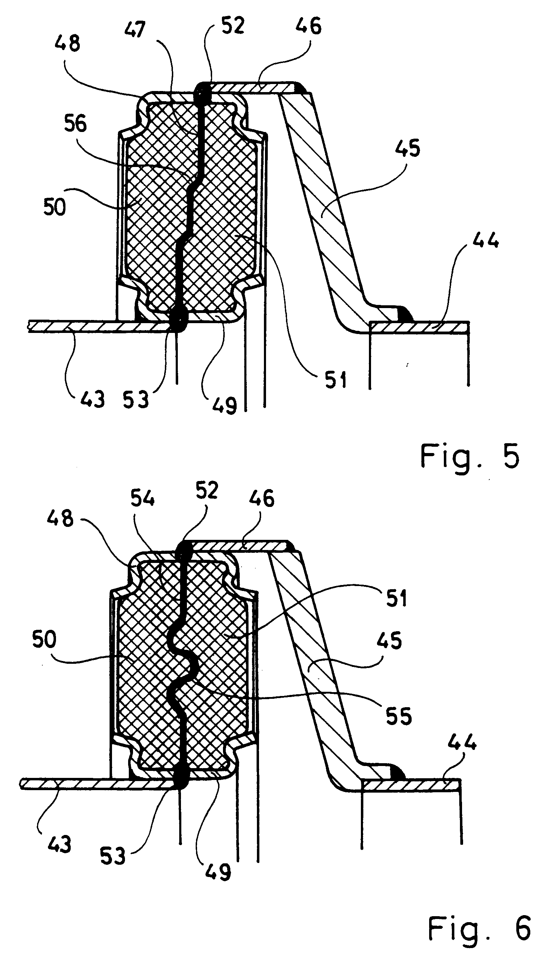

Die Ausführungsform gemäß Figur 5 zeigt zwei koaxiale Rohrleitungen 43, 44 und einen an die Rohrleitung 44 angeschweißten, nach radial ausgerichteten Bund 45 mit davon ausgehender zylindrischer Hülse 46.

Hier ist jedoch in Abweichung zu den vorstehend geschilderten Ausführungsformen die Dichtmembran 47 zwischen koaxialen, den Ringraum im wesentlichen bildenden Halteringen 48 und 49 eingeschweißt, wobei die neben der Dichtmembran 47 angeordneten Dicht- bzw. Stützkissen 50 und 51 von den entsprechend geformten Rändern der Halteringe 48 und 49 klammerartig unter im wesentlichen axialer Zusammendrückung des Außenumfanges und des Innenumfanges der Dichtringe gehalten sind.

Die so gebildete, ringförmige Einheit ist bei 52 und 53 mit der Hülse 46 bzw. dem Ende des Rohres 43 verschweißt.

Eine solche Konstruktion eignet sich besonders dazu, die aus den Teilen 47 bis 51 gebildete Baugruppe vorzufertigen, um sie in dem so komplettierten Zustand erst mit Hilfe der Schweißungen 52 und 53 einzubauen.

Figur 6 zeigt eine mit Figur 5 unmittelbar vergleichbare Bauform, weshalb auch hier wieder die vorhergehenden Bezugszeichen wiederholt sind. Unterschiedlich ist lediglich die Ausbildung der Dichtmembran 54, die wiederum in der anhand der Figur 4 geschilderten Weise zur Erhöhung der Flexibilität mit ringförmig angeordneten Wellen 55 ausgestattet ist, während zum gleichen Zweck die Dichtmembran 47 gemäß Figur 5 mit einer treppenförmigen, umlaufenden Wellung 56 versehen ist.

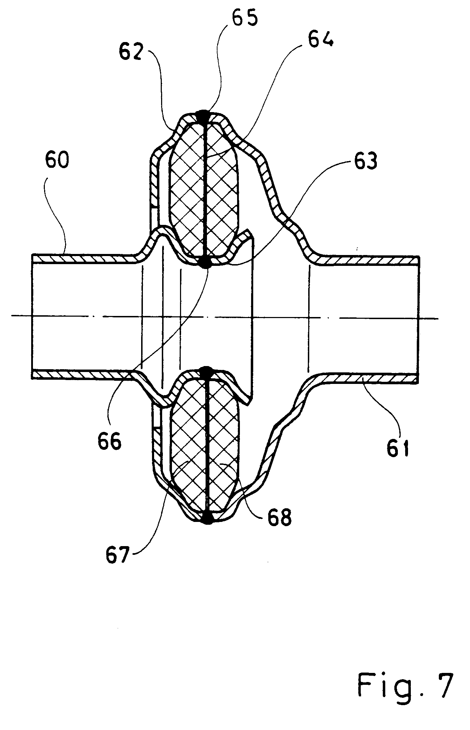

Figur 7 zeigt eine Variante der in den Figuren 5 und 6 dargestellten Bauformen, wobei an den Rohrleitungen 60, 61 Halteringe 62, 63 im wesentlichen angeformt sind, zwischen die dann wieder eine Dichtmembran 64 bei 65 und 66 eingeschweißt und beidseits Dicht- bzw. Stützkissen 67, 68 eingesetzt sind.

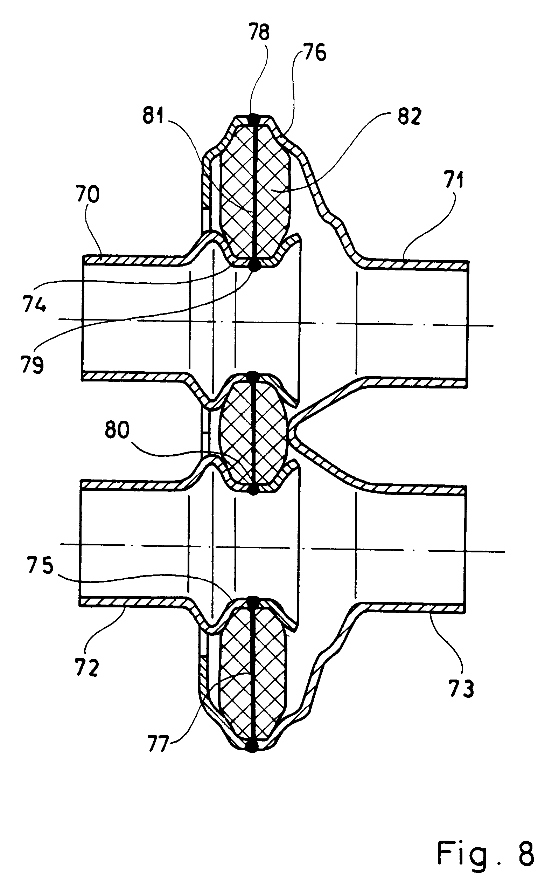

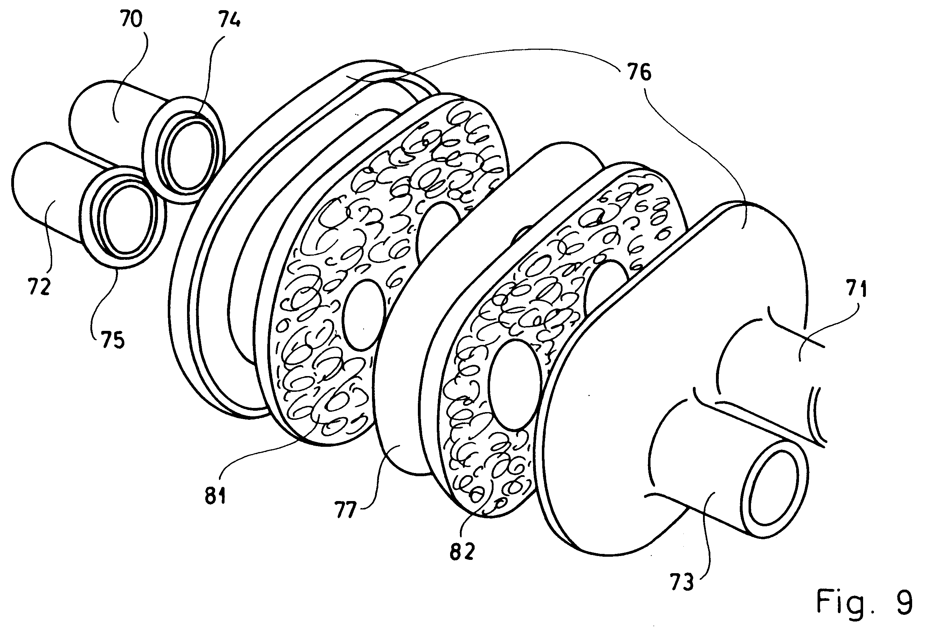

Während bisher nur einflutige, also für einen Strömungsweg vorgesehenen Rohrleitungsverbindungen gezeigt und beschrieben wurden, veranschaulichen die Figuren 8 und 9 eine zweiflutige Bauform bzw. eine Zwillingsbauweise mit zu einer Baueinheit zusammengefaßter Leitungsverbindung. Dabei zeigt Figur 9 die Bauform gemäß Figur 8 in vereinfachter perspektivischer Explosionsdarstellung.

Wie aus den Figuren 8 und 9 ersichtlich, sind miteinander fluchtende Leitungsrohre 70, 71 einerseits und 72, 73 andererseits zueinander parallel, wobei die Leitungsrohre 70 und 72 in der bereits anhand der Figur 7 beschriebenen Weise an ihrem Ende einen Haltering 74 bzw. 75 aufweisen.

Andererseits münden die Leitungsrohre 71 und 73 in einem oval ausgebildeten, gemeinsamen Haltering 76.

In den von den Halteringen 74 und 75 einerseits und dem Haltering 76 andererseits gebildeten Zwischenraum ist eine brillenförmige Dichtmembran 77 eingesetzt und entlang ihrer Außenkontur bei 78 mit dem Haltering 76 verschweißt, während ihre beiden Bohrungen bei 79 und 80 mit den Halteringen 74 und 75 verschweißt sind.

Beidseits der Dichtmembran 77 sind Dicht- bzw. Stützkissen 81 und 82 eingesetzt, die ebenfalls einen brillenförmigen Aufbau haben.

Die anhand der Figuren 8 und 9 gezeigte Bauform erlaubt es, zwei dicht nebeneinander liegende Rohrleitungen in platzsparender und konstruktiv einfacher Weise absolut dicht und flexibel miteinander zu verbinden.

Allen geschilderten Bauformen ist gemeinsam, daß sie eine absolut dichte Verbindung der einander gegenüberstehenden Rohrenden schaffen, wobei eine hohe Torsionssteifigkeit erzielt ist, während auf der anderen Seite die Flexibilität bezüglich axialer und angularer gegenseitiger Bewegungen der verbundenen Rohrenden konstruktiv in weiten Grenzen steuerbar ist, einmal über die Steifigkeit der jeweils verwendeten Dichtmembran und zum anderen über die Festigkeit bzw. Packungsdichte der verwendeten Dicht- bzw. Stützkissen.

**Patentansprüche**

1. Verbindung zweier Rohre einer Leitung für heiße Medien, insbesondere Abgasleitung von Kraftfahrzeugen, wobei die aufeinander zu gerichteten Rohrenden (1, 2; 20, 21; 43, 44; 60, 61; 70 - 73) einen sie miteinander verbindenden, koaxialen Ringraum (5, 24) wenigstens teilweise mit ausbilden, in welchem mindestens ein als Ring ausgebildetes, im axialen Querschnitt im wesentlichen rechteckiges, aus temperatur- und korrosionsbeständigem Material gepreßtes Dichtkissen (9, 10; 16, 17; 31, 32; 33, 34; 50, 51, 67, 68, 81) mit gedämpft federnden Eigenschaften in Radial - und Axialrichtung gehalten angeordnet ist, über das die Rohrenden (1, 2; 20, 21; 43, 44; 60, 61; 70 - 73) flexibel axial und angular beweglich dicht miteinander verbunden sowie radial und axial abgestützt sind, und wobei das Dichtkissen (9, 10; 16, 17; 31, 32; 33, 34; 50, 51, 67, 68, 81) durch wenigstens eine sich über den gesamten radialen Bereich des Ringraumes im wesentlichen radial erstreckende Dichtmembran (6, 15, 25, 26, 41, 47, 54, 64, 77) aus temperatur- und korrosionsbeständigem Material ergänzt ist, dadurch gekennzeichnet, daß die Dichtmembran (6, 15, 25, 26, 41, 47, 54, 64, 77) entlang ihres Außen- und Innenumfanges mit den benachbarten Wandungen (1, 4; 20, 23; 48, 49, 62, 63, 74 - 76) des Ringraumes (5, 24) verschweißt ist.

2. Verbindung nach Anspruch 1, dadurch gekennzeichnet, daß beidseits der Dichtmembran (6, 15, 25, 26, 41, 47, 54, 64, 77) je ein Dichtkissen (9, 10; 16, 17; 31, 32; 33, 34; 50, 51, 67, 68, 81) angeordnet ist.

3. Verbindung nach Anspruch 1, dadurch gekennzeichnet, daß jedes Dichtkissen (9, 10; 16, 17; 31, 32; 33, 34) mit seiner der Dichtmembran (6, 15, 25, 26, 41) abgewandten Seite gegebenenfalls unter Vorspannung durch entlang seines Außen- und Innenumfanges mit der benachbarten Wandung (1, 4; 20, 23) des Ringraumes (5, 24) fest verbundene Stützringe (11-14, 18, 35-40) gehalten ist.

4. Verbindung nach Anspruch 3, dadurch gekennzeichnet, daß die mit dem jeweiligen Dichtkissen (9, 10; 16, 17; 31, 32; 33, 34) in Berührung stehende Oberfläche der Stützringe (11-14, 18, 35-40) abgerundet ist.

5. Verbindung nach Anspruch 2, dadurch gekennzeichnet, daß Dichtmembran (47, 54, 64, 77) und Dichtkissen (50, 51, 67, 68) zwischen koaxialen, den Ringraum im wesentlichen bildenden Halteringen (48, 49, 62, 63, 74-76) angeordnet sind und daß die Halteringe mit den Rohrenden (43, 44, 60, 61, 70-73) verbunden sind.

6. Verbindung nach Anspruch 5, dadurch gekennzeichnet, daß die Halteringe (62, 63, 74-76) aus den Rohrenden (60, 61, 70-73) geformt sind.

7. Verbindung nach Anspruch 5, dadurch gekennzeichnet, daß die Halteringe (48, 49) wenigstens mittelbar, mit den Rohrenden (43, 44) durch Schweißen (52, 53) verbunden sind.

8. Verbindung nach Anspruch 5, dadurch gekennzeichnet, daß die Dichtkissen (50, 51, 67, 68) entlang ihres Außen- und Innenumfanges auf der der Dichtmembran (47, 54, 64, 77) abgewandten Seite durch klammerartige Ausbildung der Halteringe (48, 49, 62, 63, 74-76) gegebenenfalls unter Vorspannung gefaßt sind.

9. Verbindung nach Anspruch 1, dadurch gekennzeichnet, daß das Material des jeweiligen Dichtkissens (9, 10; 16, 17; 31, 32; 33, 34; 50, 51, 67, 68) entlang seines Außen-und Innenumfanges verdichtet und das Dichtkissen dort mit der benachbarten Wandung des Ringraumes verschweißt ist.

10. Verbindung nach Anspruch 1, dadurch gekennzeichnet, daß die Dichtmembran (6, 15, 25, 26, 41, 47, 54, 64, 77) mehrlagig ausgebildet ist.

11. Verbindung nach Anspruch 1, dadurch gekennzeichnet, daß die Dichtmembran (41, 47, 54) konzentrisch umlaufend eine Profilierung in Form einer Wellung (42, 55), Abstufung (56) oder dergleichen aufweist.

12. Verbindung nach Anspruch 1, dadurch gekennzeichnet, daß die aus Dichtmembran (15, 25, 26) und Dichtkissen (16, 17; 31, 32; 33, 34) gebildete Baueinheit zur Radialrichtung geneigt angeordnet ist.

13. Verbindung nach Anspruch 1, dadurch gekennzeichnet, daß bei zwei zueinander parallelen Leitungen (70, 71; 72, 73) die äußeren Wandungen ihrer Ringräume zu einem gemeinsamen ovalen Haltering (76) zusammengefaßt und die Dichtmembran (77) sowie die Dichtkissen (81, 82) als gemeinsame brillenförmige Einheit ausgebildet sind.

## Claims

1. A connection of two pipes of a conduit for hot media, especially an exhaust conduit of motor vehicles, wherein the pipe ends (1, 2; 20, 21; 43, 44; 60, 61; 70 - 73), directed towards one another at least partially contribute to the formation of a coaxial annular chamber (5, 24) interconnecting them, in which at least one sealing cushion (9, 10; 16, 17; 31, 32; 33, 34; 50, 51, 67, 68, 81) which has dampedly resilient properties which is formed as a ring, which is substantially rectangular in axial cross-section and which is pressed from temperature-resistant and corrosion-resistant material, is arranged such that it is held in the radial and axial directions, the pipe ends (1, 2; 20, 21; 43, 44; 60, 61; 70 - 73) being flexibly axially and angularly movably connected with one another in a sealed manner and being radially and axially supported by the cushion, and wherein the sealing cushion (9, 10; 16, 17; 31, 32; 33, 34; 50, 51, 67, 68, 81) is supplemented by at least one sealing diaphragm (6, 15, 25, 26, 41, 47, 54, 64, 77) of temperature-resistant and corrosion-resistant material extending substantially radially over the whole radial region of the annular chamber, characterised in that the sealing diaphragm (6, 15, 25, 26, 41, 47, 54, 64, 77) is welded along its external and internal circumferences with the adjacent walls (1, 4; 20, 23; 48, 49, 62, 63, 74 - 76) of the annular chamber (5, 24).

2. A connection according to claim 1, characterised in that a respective sealing cushion (9, 10; 16, 17; 31, 32; 33, 34; 50, 51, 67, 68, 81) is arranged on each of the two sides of the sealing diaphragm (6, 15, 25, 26, 41, 47, 54, 64, 77).

3. A connection according to claim 1, characterised in that each sealing cushion (9, 10; 16, 17; 31, 32; 33, 34) is held with its side remote from the sealing diaphragm (6, 15, 25, 26, 41), optionally under prestressing, by support rings (11-14, 18, 35-40) rigidly connected along its external and internal circumferences with the adjacent wall (1, 4; 20, 23) of the annular chamber (5, 24).

4. A connection according to claim 3, characterised in that the surface of the support rings (11-14, 18, 35-40) in contact with the respective sealing cushion (9, 10; 16, 17; 31, 32; 33, 34) is rounded off.

5. A connection according to claim 2, characterised in that the sealing diaphragm (47, 54, 64, 77) and the sealing cushion (50, 51, 67, 68) are arranged between coaxial retaining rings (48, 49, 62, 63, 74-76) substantially forming the annular chamber, and in that the retaining rings are connected with the pipe ends (43, 44, 60, 61, 70-73).

6. A connection according to claim 5, characterised in that the retaining rings (62, 63, 74-76) are moulded from the pipe ends (60, 61, 70-73).

7. A connection according to claim 5, characterised in that the retaining rings (48, 49) are connected, at least indirectly, with the pipe ends (43, 44) by welding (52, 53).

8. A connection according Co claim 5, characterised in that the sealing cushions (50, 51, 67, 68) are bound along their external and internal circumferences on the side remote from the sealing diaphragm (47, 54, 64, 77) by a bracket-like formation of the retaining rings (48, 49, 62, 63, 74-76), optionally under prestressing.

9. A connection according to claim 1, characterised in that the material of each sealing cushion (9, 10; 16, 17; 31, 32; 33, 34; 50, 51, 67, 68) is compressed along its external and internal circumferences and the sealing cushion is there welded with the adjacent wall of the annular chamber.

10. A connection according to claim 1, characterised in that the sealing diaphragm (6, 15, 25, 26, 41, 47, 54, 64, 77) is of a multi-layer construction.

11. A connection according to claim 1, characterised in that the sealing diaphragm (41, 47, 54) has a concentrically surrounding profiling in the form of a corrugation (42, 55), step form (56) or the like.

12. A connection according to claim 1, characterised in that the structural unit formed from the sealing diaphragm (15, 25, 26) and the sealing cushion (16, 17; 31, 32; 33, 34) is arranged at an inclination to the radial direction.

13. A connection according to claim 1, characterised in that in the case or two mutually parallel conduits (70, 71, 72, 73) the outer walls of their annular chambers are combined into a common oval retaining ring (76) and the sealing diaphragm (77) and the sealing cushion (81, 82) are formed as a common unit or spectacle frame form.

**Revendications**

1. Raccordement de deux tubes d'une canalisation pour fluides chauds, notamment d'un tuyau d'échappement de véhicules automobiles, dans lequel les extrémités (1,2; 20, 21; 43,44; 60,61; 70-73) des tubes, dirigées l'une vers l'autre, délimitent au moins partiellement une chambre annulaire coaxiale (5,24), qui relie entre elles les extrémités des tubes et dans laquelle est disposé, en étant retenu, au moins un coussin d'étanchéité (9,10; 16,17; 31,32; 33,34; 50,51,67,68,81), réalisé sous la forme d'un anneau, possédant une section transversale axiale sensiblement rectangulaire et constitué par un matériau résistant à la température et à la corrosion et possédant des propriétés d'élasticité avec amortissement dans la direction radiale et dans la direction axiale, et au moyen duquel les extrémités (1,2; 20,21; 43,44; 60,61; 70-73) des tubes sont réunies d'une manière étanche de façon à être mobiles axialement et angulairement avec possibilité de flexion et sont soutenues radialement et axialement, et dans lequel le coussin d'étanchéité (9,10; 16,17; 31,32; 33,34; 50,51,67, 68,81) est complété par au moins une membrane d'étanchéité (6,15,25,26,41,47,54,64,77), qui s'étend sensiblement radialement dans l'ensemble de l'étendue radiale de la chambre annulaire et est réalisée en un matériau résistant à la température et à la corrosion,
caractérisé en ce
que la membrane d'étanchéité (6,15,25,26,41,47,54,64,77) est soudée, le long de son pourtour extérieur et de son pourtour intérieur, aux parois voisines (1,4; 20,23; 48,49,62,63,74-76) de la chambre annulaire (5,24).

2. Raccordement selon la revendication 1, caractérisé en ce que respectivement un coussin d'étanchéité (9,10; 16,17; 31,32; 33,34; 50,51,67,68,81) est disposé des deux côtés de la membrane d'étanchéité (6,15,25,26,41,47,54,64,77).

3. Raccordement selon la revendication 1, caractérisé en ce que chaque coussin d'étanchéité (9,10; 16,17; 31,32; 33,34) est maintenu éventuellement sous précontrainte, au niveau de sa face tournée à l'opposé de la membrane d'étanchéité (6,15,25,26,41), par des bagues de support (11-14, 18, 35-40), qui sont raccordées, le long du pourtour extérieur et du pourtour intérieur du coussin, à la paroi voisine (1,4; 20,30) de la chambre annulaire (5,24).

4. Raccordement selon la revendication 3, caractérisé en ce que la surface des bagues de support (11-14, 18, 35-40), qui est en contact avec le coussin d'étanchéité respectif (9,10; 16,17; 31,32; 33,34), est arrondie.

5. Raccordement selon la revendication 2, caractérisé en ce que la membrane d'étanchéité (47,54,64,77) et le coussin d'étanchéité (50,51,67,68) sont disposés entre des bagues coaxiales de retenue (48,49,62,63,74-76) délimitant pour l'essentiel la chambre annulaire, et que les bagues de retenue sont raccordées aux extrémités (43,44,60,61,70-73) des tubes.

6. Raccordement selon la revendication 5, caractérisé en ce que les bagues de retenue (62,63,74-76) sont formées sur les extrémités (60,61,70-73) des tubes.

7. Raccordement selon la revendication 5, caractérisé en ce que les bagues de retenue (48,49) sont raccordées au moins indirectement par soudage (52,53) aux extrémités (43,44) des tubes.

8. Raccordement selon la revendication 5, caractérisé en ce que les coussins d'étanchéité (50,51,67,68) sont enserrées éventuellement sous précontrainte le long de leur pourtour extérieur et de leur pourtour intérieur, sur le côté, tourné à l'opposé de la membrane d'étanchéité (47,54,64,77), grâce à une réalisation en forme de pince des bagues de retenue (48,49,62,63,74-76).

9. Raccordement selon la revendication 1, caractérisé en ce que le matériau du coussin respectif d'étanchéité (9,10;16,17;31,32;33,34;50,51,67,68) est étanchéifié le long de son pourtour extérieur et de son pourtour intérieur et que le coussin d'étanchéité y est soudé à la paroi voisine de la chambre annulaire.

10. Raccordement selon la revendication 1, caractérisé en ce que la membrane d'étanchéité (6,15,25,26,41,47,54,64,77), est formée de plusieurs couches.

11. Raccordement selon la revendication 1, caractérisé en ce que la membrane d'étanchéité (41,47,54) possède un profilage périphérique concentrique se présentant sous la forme d'une ondulation (42,55), d'une partie étagée (56) ou analogue.

12. Raccordement selon la revendication 1, caractérisé en ce que l'unité de construction formée par la membrane d'étanchéité (15,25,26) et le coussin d'étanchéité (16,17;31,32;33,34) est inclinée par rapport à la direction radiale.

13. Raccordement selon la revendication 1, caractérisé en ce que dans le cas de deux conduites (70,71; 72,73) parallèles entre elles, les parois extérieures de leurs chambres annulaires sont réunies pour former une bague de retenue ovale commune (76) et que la membrane d'étanchéité (77) ainsi que les coussins d'étanchéité (81,82) sont réalisés sous la forme d'une unité commune en forme de lunettes.

Fig. 1

Fig. 2

Fig. 3

Fig. 4

Fig. 5

Fig. 6

Fig. 7

Fig. 8

Fig. 9